Europäisches Patentamt

European Patent Office

Office européen des brevets

(19)

(11) **EP 1 033 019 B1**

(12) **FASCICULE DE BREVET EUROPEEN**

(45) Date de publication et mention
de la délivrance du brevet:
**31.07.2002 Bulletin 2002/31**

(51) Int Cl.⁷: **H04L 29/06**, H04N 7/62

(21) Numéro de dépôt: **98955708.7**

(86) Numéro de dépôt international:
**PCT/FR98/02485**

(22) Date de dépôt: **20.11.1998**

(87) Numéro de publication internationale:
**WO 99/27692 (03.06.1999 Gazette 1999/22)**

(54) **PROTOCOLE DE TRANSMISSION DE DONNEES NUMERIQUES SOUS FORME D'ELEMENTS MPEG-TS**

PROTOKOLL ZUR ÜBERTRAGEN VON DIGITALEN DATEN WIE MPEG-TS-ELEMENTEN

PROTOCOL FOR DIGITAL DATA TRANSMISSION IN THE FORM OF MPEG-TS ELEMENTS

(84) Etats contractants désignés:
**DE ES GB IT**

(30) Priorité: **21.11.1997 FR 9714664**

(43) Date de publication de la demande:
**06.09.2000 Bulletin 2000/36**

(73) Titulaire: **SAGEM S.A.**
**75116 Paris (FR)**

(72) Inventeur: **LE GOURRIEREC, Marc**
**F-75626 Paris Cedex 13 (FR)**

(74) Mandataire: **Bloch, Gérard**
**2, square de l'Avenue du Bois**
**75116 Paris (FR)**

(56) Documents cités:
**WO-A-97/28652          US-A- 5 121 205**
**US-A- 5 598 415**

• **INTERNATIONAL BUSINESS MACHINES.:**
**"SYNCHRONOUS DATA LINK CONTROL**
**(SDLC)." , RESEARCH TRIANGLE PARK , 1986**
**XP002076564 3093 voir page 27, alinéa 4 - page**
**28, alinéa 1 voir page 21, alinéa 2 - page 23, alinéa**
**3**

EP 1 033 019 B1

**Description**

Le développement des réseaux câblés ou par satellites pour la diffusion de programmes de télévision, a offert une capacité de bande passante permettant de transmettre des signaux de télévision numériques et non plus analogiques. Ces signaux sont ainsi insensibles au bruit de transmission et en outre les équipements correspondants sont plus fiables, du fait qu'ils ne comportent pas de circuits analogiques.

Un autre avantage de cette "numérisation" des équipements réside dans le fait qu'on peut les faire évoluer, pour transmettre d'autres types de signaux, c'est-à-dire, de façon générale, toutes données numériques. Comme les réseaux câblés de télévision sont déjà installés, le coût des modifications de ceux-ci pour transmettre des données n'est que marginal.

La demanderesse se propose d'utiliser ces réseaux à haut débit pour transmettre des données du type de celles qu'on exploite dans des réseaux informatiques comme l'INTERNET.

La transmission des signaux numériques de télévision s'effectue en général selon la norme MPEG2, qui définit un format de paquets, qui sont émis sous forme d'un flux de transport dit MPEG2-TS.

WO97/28652 décrit un protocole de transmission de données numériques sous forme d'éléments MPEG -TS.

Un en-tête de paquet TS transporte les informations suivantes :

- un octet de synchronisation,
- un bit indiquant que la transmission a été entachée d'au moins une erreur,
- un bit appelé "pusi" indiquant que le paquet TS correspond au début d'un datagramme de niveau supérieur, appelé PES,
- un bit de priorité de transport,
- un identificateur de flux appelé PID, de 13 bits,
- deux bits servant à coder le mode d'embrouillage utilisé,
- un champ de contrôle de l'utilisation du champ d'adaptation (deux bits),
- un champ de comptage de 4 bits permettant de vérifier la continuité d'une succession de paquets TS appartenant à un même flux.

Dans le cadre du problème posé, il s'agit de transmettre des blocs de données de longueur déterminée, pouvant varier. Ces blocs sont à un format PES.

Le PES est une structure de données, de plus haut niveau que les paquets TS, également composée d'un en-tête et de données ou datagramme, de longueur variable, transportés au sein du champ de données d'un paquet TS ou d'une chaîne de tels paquets TS. Le lien entre le début d'un PES et le premier paquet TS de la chaîne est fait par le bit "pusi". Précisément, le début d'un PES est aligné sur le début d'un paquet TS dont le bit "pusi" a été mis à 1. L'en-tête PES contient un champ de 16 bits qui code la longueur utile du PES. Le dernier paquet TS est complété par des octets du champ d'adaptation lorsque la longueur ne coïncide pas exactement avec un nombre entier de paquets TS.

Or les équipements récepteurs des signaux numériques, appelés démultiplexeurs MPEG2, sont adaptés pour restituer uniquement les octets de données utiles des datagrammes PES reçus, sous la forme d'un flux continu et ils éliminent de ce fait l'en-tête PES. On ne peut donc, faute de récupérer le bit "pusi", savoir dans quel paquet TS se trouve le début du datagramme PES pas plus qu'on ne peut connaître le nombre de paquets TS servant au transport d'un même datagramme PES. Bref, on ne peut segmenter le flux continu de données restitués en datagrammes PES successifs.

L'invention vise à permettre la transmission de paquets de données, ou datagrammes, et donc leur individualisation en réception, sans utiliser les informations de l'en-tête PES.

On pourrait utiliser à cet effet le protocole de transport HDLC, qui consiste d'une part, à ajouter, aux paquets de données à transmettre, un préambule spécifique comportant un motif de six bits successifs à l'état "1", qui permet de repérer la limite entre deux paquets de données successifs, et, d'autre part, à insérer un bit 0 après toute séquence du cinq bits de données en 1. La transmission est ainsi, par ce mécanisme, rendu transparente, c'est-à-dire que le contenu du paquet de données peut être quelconque et ne peut fausser la récupération des données.

Une telle solution présente cependant l'inconvénient de nécessiter une analyse temps réel du flux de bits pour y repérer toute séquence de cinq "1", ce qui nécessite des circuits performants. En outre, le foisonnement du nombre de bits transmis peut atteindre 20 %, et, de plus, ce foisonnement est variable puisqu'il dépend du contenu des données transmises.

De ce fait, d'une part, les coûts de transmission sont accrus et, d'autre part, le contenu du paquet de données PES influe cependant indirectement sur la transmission car il peut provoquer une saturation temporaire des circuits, avec perte de données.

La présente invention vise à éviter les inconvénients ci-dessus.

A cet effet, l'invention concerne un protocole de données numériques sous forme d'éléments MPEG-TS, comprenant une pluralité de structures PES avec, chacune, un en-tête PES et au moins un datagramme source, dans lequel on encapsule le datagramme source dans un datagramme de transport garantissant de façon déterministe sa délimitation, caractérisé par le fait que le datagramme de transport comporte

- un en-tête de N octets de bits identiques et
- un bit, de valeur différente de celle des bits de l'entête, entre deux tronçons successifs de bits, du datagramme source, ayant un nombre de bits inférieur à celui de l'en-tête du datagramme de transport.

Ainsi, le datagramme source modifié de la sorte est parfaitement individualisable d'après son en-tête, qui indique un début de paquet et aussi une fin de paquet PES précédent. En outre, la transmission est "transparente" puisque toute séquence de bits du datagramme source qui serait semblable au début de l'entête et risquerait de perturber la récupération des données est interrompue avant que cet en-tête ne risque d'être reproduit en entier.

De plus, le foisonnement dû au nombre de bits ajoutés reste limité et peut être ajusté au mieux selon la longueur des datagrammes. En effet, un accroissement du nombre N d'octets d'en-tête accroît d'autant la longueur du datagramme mais diminue le nombre de tronçons et donc de bits de séparation insérés entre ceux-ci.

Le protocole est illustré au moyen du dessin annexé, sur lequel :

- la figure 1 illustre le principe de transport d'un datagramme source par trois paquets,
- la figure 2 illustre plus en détails le datagramme de transport, correspondant au datagramme source complété pour son transport.

La référence 1 désigne un paquet PES ou datagramme source, avec un en-tête 2 et M octets de données utiles 3. Les données sont ici binaires et à base d'octets.

Les trois paquets de transport 10, 11 et 12, de 188 octets chacun, représentés séparés dans cet exemple dans un but de clarté, comportent chacun un en-tête, respectivement 13, 14, 15, de 4 octets et 184 octets de champ 16, 17, 18, de données utiles. L'en-tête PES 2 et le début du champ 3 remplissent le champ 16, la suite du champ 3 étant située dans les champs 17 et 18, ce dernier comportant le cas échéant des bits 19 de bourrage en "0" pour atteindre la longueur prédéterminée de 184 octets de champ 18.

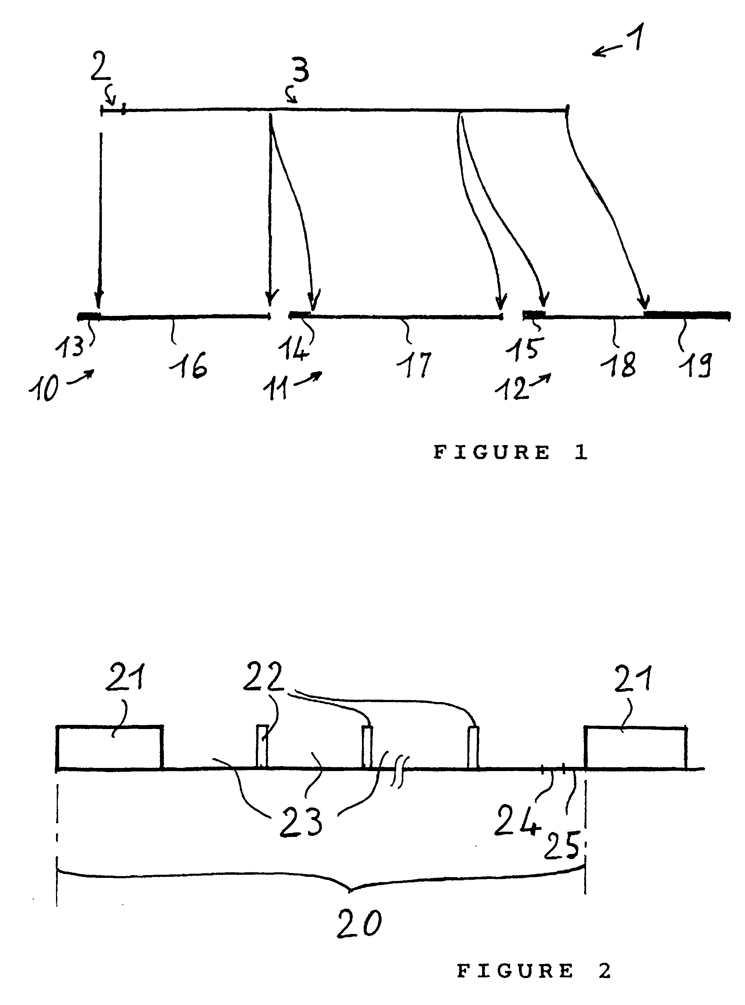

La figure 2 illustre le protocole ou format de transmission des paquets ou datagrammes PES. La référence 20 englobe les trois champs de données utiles 16, 17, 18 des paquets de transport 10, 11, 12, et illustre leur contenu, c'est-à-dire le datagramme de transport, dans lequel on a encapsulé le datagramme source 1 et qui garantit, de façon déterministe, la délimitation du datagramme source 1.

Le datagramme de transport comporte, en entête, un motif spécifique 21 de bits, constitué ici de N octets avec tous les bits à "1", c'est-à-dire le code hexadécimal FF pour chacun. N est ici égal à 5. Le champ d'en-tête 2, bien que transmis, n'est pas exploitable en réception, et n'est donc pas mentionné plus avant. Les données utiles du champ 3 sont réparties ensuite sous forme de tronçons successifs 23 de taille inférieure à celle de l'en-tête 21, c'est-à-dire de 39 bits au maximum, ce qui est le cas ici. Entre tronçons 23 successifs a été inséré un motif 22 n'existant pas dans l'en-tête 21 donc incompatible avec toute partie complémentaire de celui-ci. En d'autres termes, si, en l'absence de motifs 22, une séquence de N octets de bits utiles du champ 3, semblable au motif 21, se retrouvait en une position quelconque d'un champ 23 en débordant en général sur un champ 23 voisin, l'insertion du motif 22 ferait éclater cette séquence et y insérant une partie incompatible, sorte de virus, cette incompatibilité évitant en outre tout risque de créer, par le motif 22 lui-même, un complément de séquence qui reconstruirait un motif comme 21.

Le motif 22 est ici un simple bit en "0", donc d'état différent des bits d'en-tête 21. On conçoit que cette différence d'états des champs 21 et 22 subsiste si l'on permutait les états "0" et "1" des bits considérés.

L'avant dernier octet, référencé 24 du datagramme de transport comporte un nombre de "1" qui dépend de la longueur du champ 3 d'origine, puisque, hormis les N octets de l'en-tête 21, le datagramme de transport comporte 1 bit de motif 22 supplémentaire tous les 39 bits du champ 3 d'origine, donc présente un foisonnement légèrement supérieur à 2,5 % du champ 3. Le nombre M, entier, d'octets de ce dernier se transforme donc en $8\,M \times \frac{40}{39}$ bits, avec en plus N octets d'entête 21.

L'octet 24 de fin des données utiles est donc complété, au besoin, par des bits de bourrage à "0".

Dans cet exemple, on évite le cas pour lequel l'octet 24 ne nécessiterait pas de bits de bourrage et comporterait un ou plusieurs "1" en fin d'octet 24, susceptible(s) donc d'être adjacent(s) avec les quarante "1" de l'en-tête 21 du paquet PES suivant. Pour cela, on ajoute, au datagramme PES, un octet final "de garde" 25, rempli de bits à 0 (code 00). Tout motif FF apparaissant N fois de suite en réception est donc le motif d'entête 21, sans risque de décalage octet ni de décalage bit.

La structure exposée ci-dessus d'encapsulation est mise en oeuvre par le procédé suivant.

En émission, on ajoute, aux données à transporter, le préambule 21 de N octets et on segmente le champ des données 3, ou datagramme, en tronçons successifs 23 de taille inférieure à celle de l'en-tête 21, par insertion à intervalles réguliers d'un motif 22 incompatible avec le motif d'en-tête 21, c'est-à-dire différent de toute séquence de bits dans celui-ci.

Le datagramme de transport ainsi obtenu étant émis et reçu par un récepteur, celui-ci recherche le motif d'en-tête 21 dans le flux de données reçues. Il s'agit donc d'une fenêtre d'analyse de N octets dans laquelle glisse le signal reçu pour être analysé à chaque réception de bit. Les datagrammes successifs étant ainsi individualisés, c'est-à-dire le récepteur étant logiquement calé sur l'émetteur des datagrammes sources 3, les motifs 22, de position ainsi connue (40e, 80e, etc position après la fin de l'en-tête 21), sont alors éliminés des données utiles restitués, tout comme l'en-tête 21, ce qui redonne le champ 3.

## Revendications

1. Protocole de transmission de données numériques sous forme d'éléments MPEG-TS (11, 12, 13), comprenant une pluralité de structures PES (1) avec, chacune, un en-tête PES (2) et au moins un datagramme source (3), dans lequel on encapsule le datagramme source (3) dans un datagramme de transport (20) garantissant de façon déterministe sa délimitation, **caractérisé par le fait que** le datagramme de transport (20) comporte

   - un en-tête (21) de N octets de bits identiques et
   - un bit (22), de valeur différente de celle des bits de l'en-tête (21), entre deux tronçons successifs de bits (23), du datagramme source, ayant un nombre de bits inférieur à celui de l'en-tête (21) du datagramme de transport.

2. Protocole selon la revendication 1, dans lequel il est prévu, en fin de structure PES, un motif de garde (24).

3. Protocole selon la revendication 2, dans lequel le motif de garde (24) est constitué d'un octet de bits tous différents de ceux de l'en-tête (21).

4. Protocole selon l'une des revendications 1 à 3, dans lequel on insère un bit (22), de valeur différente de celle des bits de l'en-tête (21), entre deux tronçons de longueurs (8 x N) - 1 bits.

5. Protocole selon l'une des revendications 1 à 4, dans lequel les bits de l'en-tête (21) sont des 1.

## Patentansprüche

1. Protokoll zur Übertragung digitaler Daten in Form von MPEG-Transportstrom-Elementen (11, 12, 13), die mehrere PES-Strukturen (1) enthalten, mit jeweils einem PES-Header (2) und wenigstens einem Ursprungsdatagramm (3), wobei das Ursprungsdatagramm (3) in ein Transportdatagramm (20) eingekapselt wird, das auf deterministische Weise seine Begrenzung gewährleistet, **dadurch gekennzeichnet, dass** das Transportdatagramm (20) aufweist

   - einen Header (21) aus N Bytes identischer Bits und
   - ein einen anderen Wert als die Bits des Header (21) aufweisendes Bit (22), das zwischen zwei aufeinanderfolgenden Bitabschnitten (23) des Ursprungsdatagramms angeordnet ist, die eine Anzahl von Bits kleiner als der Header (21) des Transportdatagramms enthalten.

2. Protokoll nach Anspruch 1, wobei am Ende der PES-Struktur ein Schutzmuster (24) vorgesehen ist.

3. Protokoll nach Anspruch 2, wobei das Schutzmuster (24) aus einem Byte besteht, dessen Bits sich von denjenigen des Header (21) unterscheiden.

4. Protokoll nach einem der Ansprüche 1 bis 3, wobei ein Bit (22) zwischen zwei Abschnitten der Länge (8 x N) - 1 Bits eingefügt ist, das einen anderen Wert als die Bits des Header (21) aufweist.

5. Protokoll nach einem der Ansprüche 1 bis 4, wobei die Bits des Header (21) 1 sind.

## Claims

1. Protocol for the transmission of digital data in the form of MPEG-TS elements (11, 12, 13), comprising a plurality of PES structures (1) each having a PES header (2) and at least one source datagram (3), wherein the source datagram (3) is encapsulated in a transport datagram (20) guaranteeing its delimitation in a deterministic manner, **characterised by** the fact that the transport datagram (20) includes

   - a header (21) of N bytes of identical bits and
   - a bit (22) of a different value from that of the bits of the header (21), between two successive sections of bits (23), of the source datagram, having a number of bits smaller than that of the header (21) of the transport datagram.

2. Protocol according to claim 1, wherein a guard pattern (24) is provided at the end of the PES structure.

3. Protocol according to claim 2, wherein the guard pattern (24) is made up of a byte of bits which are all different from those of the header (21).

4. Protocol according to one of claims I to 3, wherein a bit (22) of a value different from that of the bits of the header (21) is inserted between two sections which are (8 x N) - 1 bits in length.

5. Protocol according to one of claims 1 to 4, wherein the bits of the header (21) are 1s.

FIGURE 1

FIGURE 2